Europäisches Patentamt

(19) European Patent Office

Office européen des brevets

(11) Publication number: **0 222 515**
A1

(12) # EUROPEAN PATENT APPLICATION

(21) Application number: **86307971.1**

(22) Date of filing: **15.10.86**

(51) Int. Cl.⁴: **A 01 D 34/67**
A 01 D 34/68, A 01 G 3/06

(30) Priority: **31.10.85 ZA 858369**

(43) Date of publication of application:
**20.05.87 Bulletin 87/21**

(84) Designated Contracting States:
**AT BE CH DE FR GB IT LI LU NL SE**

(71) Applicant: **J.T. MIDDLETON AND COMPANY (PROPRIETARY) LIMITED**
**2 Johnson Street**
**Alrode Transvaal(ZA)**

(72) Inventor: **Middleton, John Linley**
**138 Isipingo Road**
**Paulshof Transvaal(ZA)**

(74) Representative: **Calderbank, Thomas Roger et al,**
**MEWBURN ELLIS & CO. 2/3 Cursitor Street**
**London EC4A 1BQ(GB)**

(54) **Wheeled line trimmer.**

(57) A line trimmer has at least two castor wheels (34) which support it off the ground during mowing of a lawn. Because the castor wheels (34) are free to swivel about upright axes, the line trimmer is easily maneouvrable.

EP 0 222 515 A1

WHEELED LINE TRIMMER

## BACKGROUND TO THE INVENTION

THIS invention relates to a wheeled line trimmer.

Line trimmers, otherwise referred to as edge cutters, are usually used by gardeners to form a neat edge in the grass at the side of a flower bed or the like, or to mow down grass situated right up against a wall or other obstruction. The grass is cut by means of a rapidly moving cord carried by a rotating reel. The orientation of the line trimmer can be varied to vary the orientation of the axis about which the cord rotates, so enabling grass to be cut in places inaccessible to normal lawnmowers.

Many people have lawns which are not large enough to warrant the purchase of a conventional lawn-mower and try to use a conventional line trimmer to mow the full area of the lawn. The problem is that most conventional line trimmers have a long handle by means of which the user supports them off the ground for the rotating cord to do its work. Without any ground contact between the line trimmer and the ground, the user is unable to ensure that the grass is cut to a uniform length, and the continued support of the line trimmer off the ground is rather tiring. One solution which has been proposed is to provide a skid on the bottom of the line trimmer, but the result is a line trimmer which is not easily maneouvrable. Also, wheels have been mounted on line trimmers, but the known wheels have been fixed in position in such a manner as to provide for linear rolling support only. Maneouvrability is again a problem.

The present invention seeks to provide a more maneouvrable line trimmer.

## SUMMARY OF THE INVENTION

According to the invention, there is provided a line trimmer which includes at least two castor wheel assemblies the wheels of which provide rolling support for the line trimmer, the wheels being rotatable about lateral axes and the assemblies being free to swivel about upright axes during mowing of a lawn. Preferably the wheels of the castor wheel assemblies are in the form of spherical balls.

In a case in which the line trimmer has a shroud for protecting a user from the line trimmer's rotating cord, the castor wheel assemblies may be mounted on legs extending from the shroud. There may be two such legs extending from the shroud at an oblique angle to one another.

In one version of the invention, each castor wheel assembly comprises a bracket shaped to provide spaced forks, an axle extending rotatably between the forks and diametrically through a ball situated between the forks, and a pin extending from the bracket which is supported rotatably by a leg extending from the shroud.

According to a further feature of the invention, there are further wheels mounted rotatably on the shroud, the wheels projecting beyond the edge of the shroud.

## BRIEF DESCRIPTION OF THE DRAWINGS

Figure 1    shows a perspective view of a line trimmer according to the invention;
Figure 2    shows a detail of the mounting of a castor wheel of the trimmer of Figure 1;
Figure 3    shows how the line trimmer of Figure 1 can run on further wheels of the shroud.

DESCRIPTION OF AN EMBODIMENT

The illustrated line trimmer has an elongate tubular handle 10 terminating in a grip 12 and having an intermediate bracket 14, the grip 12 and bracket 14 being positioned to be grasped in the hands of a user. At the lower end of the handle 10 is a cutting head 16 which includes a shroud 18. The cutting head 16 includes the usual motor and cord reel, and the usual electrical cable 17 extends from the motor, through the handle 10 and outwardly to a connector 19 by means of which it can be connected to a mains electrical supply. As thus far described, the line trimmer is conventional. In use, a short length of cord is freed from the reel to project outwardly. When the motor is started, the cord describes a circular arc at great speed, scything through grass in its path and cutting it down. The shroud 18 protects the user from the rapidly moving cord.

According to the invention, the line trimmer is provided with two castor wheel assemblies 20 which are carried at the ends of legs 22 extending integrally from the shroud. Each castor wheel assembly includes a U-shaped bracket 24 having a lug 26 secured to its bight portion. The lug carries a projecting pin 28 which is retained rotatably in a suitable bush in the end of a leg 22. An axle 30 spans rotatably between the ends of the legs 32 of the bracket 24, the legs 32 providing forks to either side of a spherical ball 34. The axle passes fixedly through the ball on a diameter of the ball.

Thus each ball 34 is rotatable with its axle and the castor wheel assemblies themselves are free to swivel about the

- 4 -

0222515

axes of the pins 28.

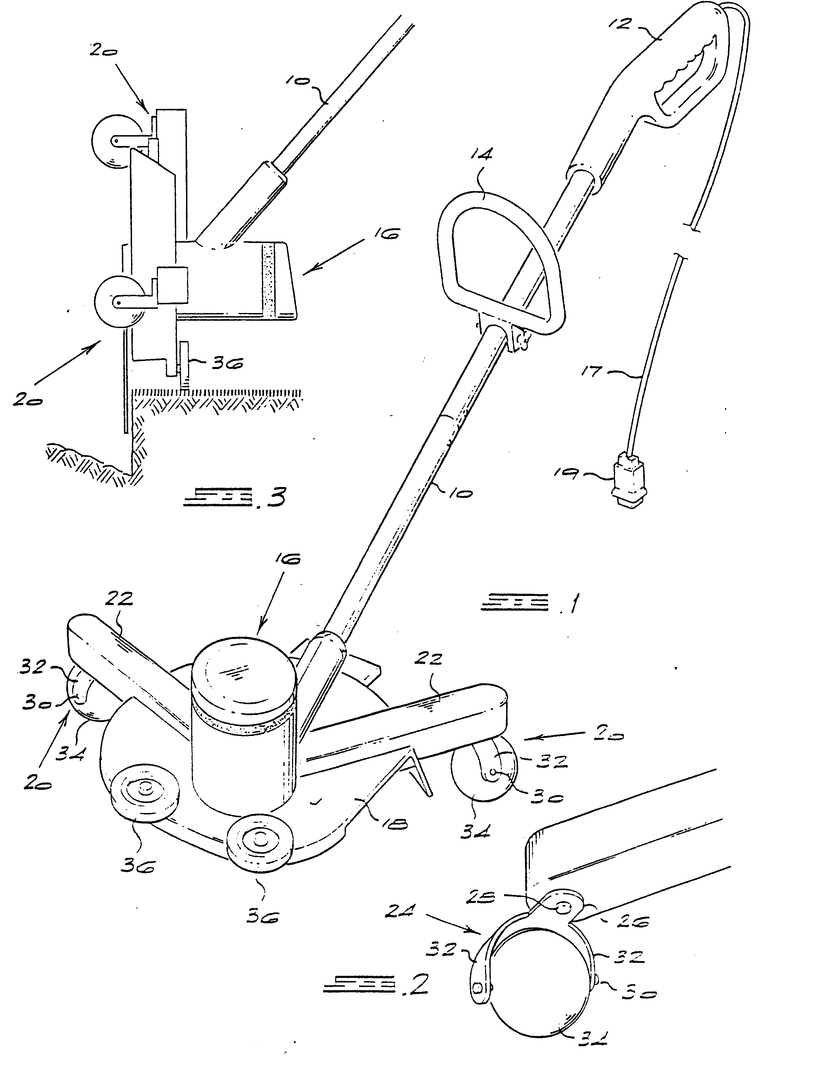

If it is desired to mow a lawn using this line trimmer, the line trimmer is arranged as shown in Figure 1 with the balls 34 on the lawn providing two-point rolling support for the trimmer. The user holds the grip 12 and is able to maneouvre the trimmer about over the surface of the lawn with ease. Because of the castor wheel nature of the rolling supports, there is no limit on the direction in which the trimmer can be steered while the cord cuts down grass in its path. It is therefore a simple matter for the user to steer the trimmer into nooks and crannies in the lawn and withdraw the trimmer when the grass is properly mown.

Note that wheels in the form of spherical balls are preferred to conventional planar wheels, since the balls are capable of rolling over bumps, tufts of grass and the like without digging in.

A further feature of the invention is provided by further planar wheels 36 which are arranged mounted to the shroud 18 for free rotation about axes transverse to the shroud and projecting beyond the edge of the shroud. Figure 3 illustrates the convenience of this arrangement when the trimmer is used in an edge cutting role. The trimmer is held in such a way that the shroud is vertically oriented and the wheels run on the lawn adjacent the edge of the flower bed or other depression the edge of which is to be trimmed neatly. Because the wheels rotate in one plane only, the flower bed or depression can be edge-trimmed along a straight line. The wheels 36 are also useful when trimming right up to a wall or other linear obstacle, since they can be brought into contact with the wall or obstacle and the trimmer moved in a straight line with the wheels running on the wall or obstacle.

<u>CLAIMS</u>

1.

A line trimmer characterized in that it includes at least two castor wheel assemblies (20) the wheels (34) of which provide rolling support for the line trimmer, the wheels (34) being rotatable about lateral axes and the assemblies (20) being free to swivel about upright axes during mowing of a lawn.

2.

The line trimmer of claim 1, characterized in that the wheels of the castor wheel assemblies (20) are in the form of spherical balls (34).

3.

The line trimmer of claim 2, in which the line trimmer is of the type having a shroud protecting a user from the line trimmer's moving cord, characterized in that the castor wheel assemblies (20) are mounted on legs (22) extending from the shroud (18).

4.

The line trimmer of claim 3, characterized in that each castor wheel assembly (20) comprises a bracket (24) shaped to provide spaced forks (32), an axle (30) extending rotatably between the forks (32) and diametrically through a ball (34) situated between the forks (32), and a pin (28) extending from the bracket (24) which is supported rotatably by a leg (22) extending from the shroud (18).

5.

The line trimmer of either one of claims 3 or 4, characterized in that there are two legs (22) extending from the shroud (18) at an oblique angle to one another.

6.
The line trimmer of any one of claims 3 to 5 characterized
in that it includes further wheels (36) mounted rotatably on
the shroud (18), the wheels (36) projecting beyond the edge
of the shroud (18).

FIG. 1

FIG. 2

FIG. 3

0222515

EUROPEAN SEARCH REPORT

Application number

European Patent Office

| | DOCUMENTS CONSIDERED TO BE RELEVANT | | EP 86307971.1 |
|---|---|---|---|
| Category | Citation of document with indication, where appropriate, of relevant passages | Relevant to claim | CLASSIFICATION OF THE APPLICATION (Int. Cl.4) |
| A | US - A - 4 182 100 (LETTER)<br>* Totality *<br>-- | 1,4 | A 01 D 34/67<br>A 01 D 34/68<br>A 01 G 3/06 |
| A | AU - A - 485 038 (GRASS DISPOSOLS PTY. LTD.)<br>* Totality *<br>-- | 1,4,6 | |
| A | US - A - 3 952 483 (MASTERSON)<br>* Totality *<br>-- | 1,4 | |
| A | FR - A - 1 535 078 (PORTEJOIE-BRUNET-LAVOUD)<br>-- | | |
| A | US - A - 4 307 561 (HICKS)<br>* Fig. 1 *<br>---- | 1,3,4 | TECHNICAL FIELDS SEARCHED (Int. Cl.4)<br><br>A 01 D 34/00<br>A 01 G 3/00 |

The present search report has been drawn up for all claims

| Place of search | Date of completion of the search | Examiner |
|---|---|---|
| VIENNA | 20-01-1987 | RIEMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82